# EUROPÄISCHE PATENTSCHRIFT

(11) **EP 2 328 675 B1**
(45) Veröffentlichungstag und Bekanntmachung des Hinweises auf die Patenterteilung: **29.05.2013**
(21) Anmeldenummer: 09781566.6
(22) Anmeldetag: 06.08.2009
(51) Int. Cl.: B01D 53/50, B01D 53/94

(54) **VERFAHREN UND ABGASANLAGE ZUR REINIGUNG SOx-HALTIGER ABGASE, INSBESONDERE VON SCHIFFSBRENNKRAFTMASCHINEN**
METHOD AND EXHAUST GAS SYSTEM FOR SCRUBBING EXHAUST GASES CONTAINING SOx, IN PARTICULAR ONBOARD INTERNAL COMBUSTION ENGINES OF SHIPS
PROCÉDÉ ET INSTALLATION DE GAZ D'ÉCHAPPEMENT POUR L'ÉPURATION DE GAZ D'ÉCHAPPEMENT CONTENANT DES SOX, EN PARTICULIER PROVENANT DES MOTEURS À COMBUSTION INTERNE DE BATEAUX

(30) Priorität: 25.08.2008 DE 102008041530
(43) Veröffentlichungstag der Anmeldung: 08.06.2011
(73) Patentinhaber: Schlicht, Torsten, London N1 7NB (GB); Dombrowski, Dirk, 17487 Empuriabrava (ES)
(72) Erfinder: Schlicht, Torsten, London N1 7NB (GB); Dombrowski, Dirk, 17487 Empuriabrava (ES)
(74) Vertreter: Gulde Hengelhaupt Ziebig & Schneider
(86) Internationale Anmeldenummer: PCT/EP2009/060218
(87) Internationale Veröffentlichungsnummer: WO 2010/026018

(56) Entgegenhaltungen:
- WO-A1-00/32912
- WO-A1-01/56686
- US-A1- 2004 006 975

## Beschreibung

Die vorliegende Erfindung betrifft ein Verfahren sowie eine Abgasanlage zur Entfernung von Schadstoffen aus einem Abgasstrom einer mit einem schwefelhaltigen Brennstoff betriebenen Brennkraftmaschine, insbesondere einer Schiffsbrennkraftmaschine nach den Oberbegriffen der unabhängigen Ansprüche.

Nach dem Stand der Technik werden Brennkraftmaschinen mit verschiedenen Abgasnachbehandlungssystemen ausgestattet, um Schadstoffemissionen zu reduzieren. Die wesentlichen Schadstoffe aus dem Abgas von an Bord von Schiffen betriebenen Brennkraftmaschinen sind Stickoxide (NOₓ), Schwefeldioxid (SO₂), Schwefeltrioxid (SO₃), Kohlenmonoxid (CO), Kohlendioxid (CO₂), unverbrannte Kohlenwasserstoffe (HC), wie Paraffine, Aldehyde, Olefine, Aromaten sowie Rußpartikel, die den Kohlenstoff sowohl als Feststoff als auch in Form der sogenannten "volatile organic compounds" (VOC) enthalten. Des Weiteren gehören Feinstaubpartikel dazu, die entsprechend ihrer Partikelgröße als "PM 2,5" und "PM 10" bekannt sind. Ferner sind Schwermetalle wie Vanadium, Nickel, Blei, Zink und Cadmium, sowie Aluminium, Magnesium, Kobalt und Silizium enthalten.

Bei den Schiffsbrennkraftmaschinen handelt es sich um langsam drehende 2-Takt-Motoren, die mit Schwerölen der Qualitäten IFO180, IFO380, MDO und MGO betrieben werden, sowie um 4-Takt-Motoren, die mit den gleichen Schwerölen betrieben werden. Kraftstoffe für PKW und LKW enthalten heutzutage Schwefelgehalte von 10 ppm bis 50 ppm, während Brennstoffe für Schiffsbrennkraftmaschinen, z.B. das Heavy Fuel Oil (HFO), üblicherweise einen Anteil von organisch gebundenem Schwefel haben, der um etwa einen Faktor von etwa 100 höher liegt und 4,5 Vol.% erreichen kann. Zudem enthalten in Schiffsmotoren verwendete Schweröle hohe Anteile an Schwermetallen im Milligrammbereich pro Liter Brennstoff.

Dieser hohe Schwefelwert macht den Betrieb von Abgasreinigungsanlagen, wie sie in Personen- und Lastkraftwagen eingesetzt werden, unmöglich. Der im Brennstoff organisch gebundene Schwefel wird während des Verbrennungsvorganges im Motor zu SO₂ (ca. 90 %) und SO₃ (ca. 10 %) umgesetzt. Schwefeldioxid und Schwefeltrioxid sind als Katalysatorgift bekannt und verringern die Umsetzungsrate eines NOₓ-Katalysators in erheblichem Maße. Für einen wirtschaftlichen Betrieb eines NOₓ-Katalysators hinter einem Schiffsbrennkraftmotor ist eine vorhergehende Entschwefelung des Abgases zwingend erforderlich, da die vergleichsweise niedrige Abgastemperatur nur den Betrieb eines Niedrig-Temperatur-Katalysators zulässt, der in einem Temperaturbereich von 170 °C bis 250 °C arbeitet.

Anders als bei zum Stand der Technik gehörenden Abgasreinigungsanlagen für Personen- oder Lastkraftwagen liegt somit die Herausforderung der Abgasreinigung maritimer Verbrennungsabgase in der Bereitstellung eines Systems, das die Schwefelmengen, die in Brennstoffen für derartige Schiffsmotoren enthalten sind und um ein Vielfaches über den Schwefelgehalten für Kraftstoffe für Personenkraftwagen und Lastkraftwagen liegen, bewältigen kann.

### Stand der Technik

Für die Abgasreinigung bei Großanlagen der Energieerzeugung und der Müllverbrennung sind Lösungen bekannt, die den heutigen Anforderungen hinsichtlich des Reinheitsgrades der Abluft gerecht werden. Oftmals übertreffen die Investitionskosten für die Abgasreinigung allerdings die Investitionskosten für den eigentlichen technologischen Prozess. Insbesondere bei großen Müllverbrennungsanlagen und Sondermüllverbrennungsanlagen muss das Abgas eine Vielzahl von verfahrenstechnischen Stufen durchlaufen, bevor es mit einem hohen Reinheitsgrad in die Atmosphäre geleitet werden kann.

Aus der EP 0 484 317 A2 ist ein Verfahren sowie eine Vorrichtung zum Eindüsen von festen Additiven in Verbrennungsanlagen bekannt. Dabei werden die Additive in einem Rührwerk aufgeschlämmt und in den Verbrennungsraum bzw. in den Abgaskanal eingedüst.

In der EP 0 161 497 A2 wird ein Verfahren zur Rauchgasentschwefelung von Feuerungsanlagen, wie z.B. Dampferzeugern von Kohlekraftwerken beschrieben, bei dem als Trockenadditiv ein Natriumbicarbonat verwendet wird, welches nach der Brennkammer der Feuerungsanlage dem Rauchgas zugemischt wird und anschließend nach einer Kontaktzeit mit den eingebundenen Schwefelverbindungen in einem nachgeschalteten Staubfilter abgeschieden wird. Zur Verlängerung der Kontaktzeit für das Trockenadditiv wird das Rauchgas an einem Gewebefilter gereinigt.

Weiterhin ist aus der EP 0 666 098 A2 ein Verfahren zur Reinigung von Verbrennungsabgasen einer Müllverbrennungsanlage bekannt, bei welchem in einem Wirbelschichtreaktor das Abgas mit den Additiven in Kontakt gebracht wird. Dieses Verfahren ist durch die Kombination mehrerer Abscheidestufen gekennzeichnet.

Aus der Vielzahl der Verfahren und Vorrichtungen zur Rauchgasreinigung soll noch ein Aktivsorbensreaktor gemäß DE 196 06 414 A1 zur Rauchgasreinigung genannt werden, der einen doppelwandigen Schüttkörper besitzt, in dem sich das Adsorbens befindet. Das Rauchgas wird über den ringförmigen Hohlraum über den Schüttkörper verteilt und durchströmt diesen.

Aus DE 34 438 32 A1 ist ein Schüttschichtfilter zur Rauchgasreinigung bekannt, das über eine großflächige, langgestreckte Filterform verfügt und die Schüttschicht in gewünschter Stärke ohne Nesterbildung und Hohlräume austrägt. Dabei wird die Schüttschicht aus pulverförmigen Adsorbenzien hergestellt. Der Nachteil dieses Verfahrens und des aus DE 196 06 414 A1 bekannten Verfahrens liegt darin, dass die Durchströmbarkeit der Schüttschicht durch das zu reinigende Abgas durch die Volumenvergrößerung des Adsorbens nach der chemischen Reaktion verringert wird und große Mengen des Adsorbens nicht mehr in Kontakt mit dem Abgas kommen. Das Adsorbens nimmt an der Reinigung des Abgases nicht teil und wird unverbraucht aus dem Schüttschichtfilter ausgetragen.

Die JP 5-255746 A schlägt ein vereinfachtes Trockenentschwefelungsverfahren vor, bei dem ein Entschwefelungsagens sowohl in den Feuerungsraum als auch vor einen nachgeschalteten Sprühtrockner dosiert wird.

EP 0 253 563 A schlägt ein Verfahren vor, das eine getrennte Dosierung eines basischen Absorptionsmittel in wässriger Flüssigkeit und eines trockenen pulverförmigen aktiven Kohlenstoffs vorsieht. Der Nachteil dieses Verfahrens besteht darin, dass sich kohlenstoffhaltigen Additive bei Temperaturen von über 150 °C selbst entzünden können und in einem solchen Fall der bestimmungsgemäße Betrieb einer Rauchgasreinigungsanlage nicht gegeben ist.

DE 196 52 902 A beschreibt eine Anlage zur Nachbehandlung eines Abgases einer Abfallverbrennungsanlage. Dabei wird der Abgasstrom zunächst einem Kühler zugeführt, der das Abgas auf 170 bis 180 °C kühlt, um in einem optionalen Schritt dem Abgas ein festes SOₓ-Absorptionsmittel zur chemisorptiven Bindung von SO₂ zuzusetzen. Anschließend wird das Abgas einem filternden Abscheider zugeführt, um Staub und zugeführten Aktivkoks zu entfernen. Nach einer weiteren Entschwefelung in einer Nassstufe, in der Abgas mit einem angeschlämmten schwefelbindenden Mittel, wie CaO, Ca(OH)₂ oder MgCO₃ berieselt wird, durchläuft das Abgas eine SCR-Entstickungsstufe.

Nach dem Stand der Technik werden die Stickoxide (NOₓ) im Rauchgas nach dem Verfahren der selektiven katalytischen Reduktion (SCR) durch Kontaktierung mit einem Katalysator (DeNOx-Katalysator) unter Anwesenheit eines Reduktionsmittels katalytisch zu Stickstoff und Wasser umgesetzt. Als Reduktionsmittel wird nach dem Stand der Technik Ammoniak verwendet, welches in unterschiedlichen Formen (gasförmig, in wässriger Lösung oder durch Umwandlung entsprechender Vorläuferverbindungen wie Harnstoff) bereitgestellt werden kann. Die katalytische Umwandlung wird nach dem Stand der Technik in einem Temperaturbereich zwischen 200°C und 500°C (z.B. Patent: WO 02/068097 A1) durchgeführt.

Aus dem Bereich der Automobilindustrie sind zahlreiche Verfahren bekannt, die zur Abgasbehandlung von Verbrennungsmotoren Katalysatoren, z.B. in Form von SCR-Katalysatoren oder NOx-Speicherkatalysatoren, und Ruß-Partikelfilter vorschlagen (DE 10 2005 058 858, EP 1 900 916 A2, EP 1 873 367 A1, DE 3 821832, EP 1 908 932, EP 1 914 000, DE 10 2006 007 056, DE 10 2005 034 462, DE 10 2005 059 45). Alle Verfahren haben das gemeinsame Merkmal, dass sie zwingend auf die Verwendung schwefelfreier Brennstoffe angewiesen sind, da sonst eine Vergiftung des Katalysators stattfindet und damit einhergehend die Abnahme der katalytischen Aktivität. Diese Verfahren sind somit nicht geeignet für die Abgasreinigung von Abgasen aus mit schwefelhaltigem Brennstoff betriebenen Brennkraftmaschinen.

Aus JP 2007-231918 A ist eine Abgasanlage für Kraftfahrzeuge bekannt, die als erste Reinigungsstufe einen SOₓ-Speicherkatalysator umfasst, als zweite Reinigungsstufe ein Partikelfilter und als dritte Reinigungsstufe einen SCR-Katalysator, wobei das Reduktionsmittel stromab des Partikelfilters und stromauf des SCR-Katalysators dem Abgas zugesetzt wird.

US 6,758,036 B beschreibt eine Abgasanlage für automobile Anwendungen, die eine Schwefelfalle, ein Partikelfilter sowie einen NOₓ-Speicherkatalysator umfasst. Zur Regeneration des NOₓ-Speicherkatalysators wird an einer Zuführungsstelle, die zwischen dem Partikelfilter und dem NOₓ-Speicherkatalysator angeordnet ist, Kraftstoff in das Abgas eingespeist.

US 2004/006975 A1 beschreibt eine Abgasanlage für einen Dieselmotor, umfassend eine im Abgaskanal angeordnete Entschwefelungsstufe nicht näher erläuterter Funktionsweise, stromab der Entschwefelungsstufe angeordnete Injektoren zur Zudosierung von Kraftstoff in den Abgasstrom sowie jeweils einen stromab des Partikelfilters angeordneten NOₓ-Adsorber. Der NOₓ-Adsorber wird diskontinuierlich betrieben, wobei in seinen Regenerationsphasen dem Abgasstrom Kraftstoff zudosiert wird.

Neben Feststoffpartikeln, Schwefeloxiden gehören Stickoxide zu den limitierten Abgaskomponenten die während Verbrennungsprozessen in an Bord von Schiffen betriebenen Brennkraftmaschinen entstehen und deren erlaubte Emissionen immer weiter abgesenkt werden. Innermotorische Maßnahmen, wie Abgasrückführung und direkte Wassereinspritzung genügen nicht, um die zukünftigen Grenzwerte zuverlässig einzuhalten. Zur Minimierung dieser Abgaskomponenten bei in Kraftfahrzeugen einzuhalten. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NOx-Umsätze anzuheben. Bekannt geworden sind diese Verfahren unter dem Sammelbegriff SCR-Verfahren, wobei SCR für "selektive katalytische Reduktion" steht. Eine ausführliche Darstellung solcher Verfahren ist der DE 34 28 232 zu entnehmen.

### Aufgabenstellung

Der Erfindung liegt die Aufgabe zugrunde, ein für Schiffsbrennkraftmaschinen geeignetes Abgasreinigungsverfahren zur Verfügung zu stellen, bei dem das Abgas mit einem deutlich reduziertem Schadstoffanteil in die Umgebung gelangt. Es soll ferner eine zur Ausführung des Verfahrens geeignete Abgasreinigungsanlage mit einfachem und platzsparendem Aufbau angegeben werden.

Diese Aufgabe wird durch ein Verfahren und eine Abgasanlage zur Entfernung von Schadstoffen aus einem Abgasstrom, der gegebenenfalls Flugasche enthalten kann, einer mit einem schwefelhaltigen Brennstoff, betriebenen Brennkraftmaschine, insbesondere einer Schiffsbrennkraftmaschine, mit den Merkmalen der unabhängigen Ansprüchen gelöst. Das erfindungsgemäße Verfahren umfasst die Schritte:
- Kontaktierung des Abgasstroms mit einem festen Adsorbens oder mit einer Waschlösung, wobei saure Schadstoffe, umfassend Schwefeldioxid und Schwefeltrioxid, chemisorptiv gebunden werden;
- Zudosierung zumindest eines Teils eines Reduktionsmittels oder einer chemischen Vorstufe von diesem in den Abgasstrom;
- anschließende Durchleitung des Abgasstroms durch ein vorzugsweise keramisches Partikelfilter, wobei organische und anorganische Partikel abgetrennt werden; und
- anschließende Zuführung des Abgasstroms zu einem SCR-Katalysator, wobei mittels eines dem Abgas zudosierten Reduktionsmittels Stickoxide katalytisch umgesetzt werden, wobei zumindest ein Teil des Reduktionsmittels oder einer chemischen Vorstufe von diesem stromauf des Partikelfilters dem Abgasstrom zudosiert wird.

Die erfindungsgemäße Abgasanlage umfasst:
- eine in einem Abgaskanal angeordnete Entschwefelungsstufe, umfassend einen Schüttschichtfilter mit einem festen Adsorbens oder eine Nasswäscheeinrichtung, zur chemisorptiven Bindung saurer Schadstoffe, umfassend Schwefeldioxid und Schwefeltrioxid;
- eine stromab der Entschwefelungsstufe angeordnete Dosiervorrichtung zur Zudosierung eines Reduktionsmittels oder einer chemischen Vorstufe von diesem in den Abgasstrom;
- ein stromab der Dosiervorrichtung angeordnetes, vorzugsweise keramisches Partikelfilter zur Abtrennung organischer und anorganischer Partikel; und
- einen stromab des Partikelfilters angeordneten SCR-Katalysator zur katalytischen Umsetzung von Stickoxiden mittels des dem Abgas zudosierten Reduktionsmittels.

Somit beruht die vorliegende Erfindung auf einem dreistufigen Aufbau, der eine Entschwefelungsstufe, eine Partikelfilterstufe sowie eine Entstickungsstufe beinhaltet.

Dabei wird im Rahmen der vorliegenden Erfindung unter einer Schiffsbrennkraftmaschine oder einem Schiffsmotor ein mit Schwerölen (HFO für Heavy Fuel Oil, auch Bunkeröl genannt) der Qualitäten IFO180 (Intermediate Fuel Oil), IFO380, MDO (Marine Diesel Oil) oder MGO (Marine Gas Oil) betrieben werden. Bei diesen Treibstoffen handelt es sich zumeist um Abfallprodukte aus der Erdölraffinierung, die bei Raumtemperatur eine bitumenähnliche Konsistenz aufweisen und daher vor ihrer Förderung zum Motor erwärmt werden müssen. Oftmals werden diese Öle vor ihrer Verbrennung im Motor einer Filtration unterworfen, um feste Bestandteile zu entfernen. Bei den Motoren handelt es sich typischerweise um langsam drehende 2-Takt-Motoren, seltener um 4-Takt-Motoren. Wie eingangs bereits erläutert, zeichnen sich diese Brennstoffe durch einen Schwefelgehalt aus, der etwa um den Faktor 100 höher liegt als Kraftstoffe für Personen- oder Lastkraftwagen. Insbesondere weisen diese Brennstoffe einen Gehalt an organisch gebundenen Schwefel von mindestens 1000 ppm (1 %) auf, wobei typische Werte heute im Bereich von 2.000 bis 20.000 ppm liegen und Spitzenwerte von bis zu 45.000 ppm Schwefel erreichen.

Aufgrund des hohen Anteils an organisch gebundenem Schwefel im Brennstoff, der während des Verbrennungsvorgangs zu SO₂ und SO₃ umgesetzt wird, enthalten die Verbrennungsabgase der beschriebenen Brennkraftmaschinen mindestens 1.000 mg SOx pro Normkubikmeter Abgas, typischerweise mindestens 2.000 mg/m³. Maximalwerte der Schwefeloxide im Abgas können sogar 5.000 mg/m³ erreichen. Um den Entstickungskatalysator (SCR-Katalysator) vor einer Vergiftung mit Schwefel zu schützen, wird erfindungsgemäß das Abgas zunächst einer Entschwefelungsstufe unterzogen, die als Nasswäscheverfahren ausgestaltet sein kann, wobei der Abgasstrom mit einer Waschlösung kontaktiert wird, beispielsweise durch eine Waschlösung geleitet wird oder mit einer solchen berieselt wird. Im Rahmen der vorliegende Erfindung bevorzugt ist jedoch die Kontaktierung des Abgasstroms mit einem festen Adsorbens, das vorzugsweise in Form einer granulierten Schüttung, insbesondere in einem Schüttschichtfilter vorliegt. Dabei haben sich durchschnittliche Korngrößen des granulierten Adsorbens von 1 bis 20 mm, bevorzugt 2 bis 8 mm als vorteilhaft erwiesen. Bei Korngrößen unterhalb von 1 mm wird der Abgasgegendruck zu hoch, wobei bei Korngrößen oberhalb von 20 mm die spezifische Oberfläche des Granulats unterhalb eines ungünstigen Wertes fällt. Ein weiterer Vorteil der erfindungsgemäßen Entschwefelungsstufe ist, dass gleichzeitig auch gasförmige Schwermetalle abgeschieden werden.

Geeignete Adsorbentien für die Schüttung umfassen Erdalkalihydroxide, insbesondere Calciumhydroxid und Magnesiumhydroxid; Natriumbibicarbonat und Kalkstein, aber auch Mischungen von diesen oder anderen bekannten Adsorbentien. Eine besonders geeignete Mischung umfasst Calciumhydroxid und 0,1 bis 99,9 Gew.-%, insbesondere 1 bis 50 Gew.-% Magnesiumhydroxid. Durch Variierung der Mischungsverhältnisse der Adsorbentien kann der Schwefelabscheidegrad eingestellt werden.

In vorteilhafter Weiterbildung kann dem Adsorbens ein kohlenstoffhaltiges Additiv zugegeben werden, wodurch die Abscheidung gasförmiger Schwermetalle noch verbessert wird. Beispielsweise kann zu diesem Zweck Aktivkohle oder Herdofenkoks verwendet werden. Es wurde außerdem herausgefunden, dass kohlenstoffhaltige Additive die Abscheidung von Rußpartikeln begünstigen, so dass eine Teilmenge der in der Brennkraftmaschine gebildeten Rußpartikel bereits in der ersten Filterstufe (Entschwefelungsstufe) abgeschieden wird und in gebundener Form ausgeschleust wird, was zu einer Reduzierung des CO₂-Ausstoßes führt. Eine vorteilhafte Mischung eines Adsorbens beinhaltet eine oder mehrere der oben genannten Adsorbentien mit einem Anteil eines kohlenstoffhaltigen Additivs von 0,1 bis 50 Gew.-%, vorzugsweise von 1 bis 35 Gew.-%.

Eine besonders gute Abtrennung der Schwefeloxide wird erreicht, wenn der Abgasstrom in der Entschwefelungsstufe, insbesondere bei Kontaktierung des Adsorbens, eine Temperatur im Bereich von 150 bis 400°C aufweist. Zu diesem Zweck kann vorgesehen sein, dass die Temperatur des Abgasstroms stromauf der Entschwefelungsstufe insbesondere durch Anordnung eines Wärmetauschers eingestellt wird, wobei sowohl eine Temperaturerhöhung als auch Absenkung erforderlich sein kann.

Die zweite erfindungsgemäße Reinigungsstufe besteht in einer Partikelfiltration, wobei ein Partikelfilter mit keramischen Filterelementen bevorzugt eingesetzt wird. Keramische Partikelfilter sind besonders für die Filtration von heißen Abgasen geeignet, da sie sich durch eine hohe Temperaturbeständigkeit auszeichnen. Als eine besonders geeignete Keramikverbindung hat sich in diesem Zusammenhang Siliziumcarbid erwiesen, da diese Keramik chemisch stabil ist und eine hohe Wärmeleitfähigkeit sowie Temperatur- sowie Temperaturwechselbeständigkeit aufweist. Der Einsatz derartiger Partikelfilter zur Entfernung von Rußpartikeln aus dem Abgas von Pkw- oder Lkw-Dieselmotoren hat sich bereits bewährt (siehe WO 93/13303 A1, EP 0796830 A1). Dabei wird die Porenweite der Filterelemente so gewählt, dass vorzugsweise auch Feinstaubpartikel der Definition PM10 und PM2,5 entfernt werden, d.h. Partikel mit einem Durchmesser ≥10 µm bzw. ≥2,5 µm.

Das auf diese Weise von schädlichen Katalysatorgiften gereinigte Abgas wird anschließend dem Katalysator zugeführt, der mittels eines dem Abgas zudosierten Reduktionsmittels Stickoxide (NOₓ) katalytisch umsetzt. In dem Katalysator werden auch organische Schadstoffe, beispielsweise Dioxine, insbesondere polychlorierte Dibenzodioxine und Furane, insbesondere polychlorierte Dibenzofurane, halogenierte organische Verbindungen als auch Kohlenwasserstoffe durch Oxidation zerstört. Überraschend wurde gefunden, dass bei Dosierung des Reduktionsmittels bereits vor der Partikelfilterstufe (und nicht, wie nach dem Stand der Technik üblich, erst vor dem Denox-Katalysator) die Bildung von Ammoniumhydrogensulfat und Ammoniumsulfat nach den Reaktionsgleichungen:

NH₃ + SO₃ + H₂O→ NH₄HSO₄

und

2NH₃ + SO₃ + H₂O → (NH₄)2SO₄

vor und in der Partikelfilterstufe stattfindet. Die so gebildeten Ammoniumsalze schlagen sich dann auf den Oberflächen des Partikelfilters nieder und gelangen somit nicht mehr auf die Oberflächen des nachgeschalteten Katalysators. Auf diese Weise wird SOₓ, das in der Entschwefelungsstufe nicht entfernt wurde, wirkungsvoll in der Partikelfilterstufe entfernt. Ein weiterer Vorteil, der sich aus der Dosierung des Reduktionsmittels vor der Partikelfilterstufe ergibt, ist eine gute Durchmischung des Abgases mit dem Reduktionsmittel, so dass auf die Verwendung einer Mischeinrichtung vor dem Katalysator verzichtet werden kann.

Ungeachtet der erfindungsgemäßen Zudosierung des Reduktionsmittels vor der Partikelfilterstufe kann eine zusätzliche Zudosierung des Reduktionsmittels oder seiner chemischen Vorstufe stromauf des Katalysators erfolgen. Dies ermöglicht, die für die Katalyse erforderliche Reduktionsmittelmenge genauer zu dosieren, wodurch der Schlupf überschüssigen Reduktionsmittels verringert werden kann und der Verbrauch ökonomischer gestaltet werden kann. Als Reduktionsmittel wird bevorzugt Ammoniak NH₃ verwendet, das insbesondere in Form einer wässrigen Ammoniaklösung zudosiert werden kann, wobei der Ammoniakanteil 1 bis 50 Gew.-%, insbesondere 25 bis 50 Gew.-% betragen kann. Alternativ kann eine chemische Vorstufe von Ammoniak in Form festen Harnstoffs oder einer Harnstofflösung beispielsweise mit einem Harnstoffanteil von 1 bis 50 Gew.-%, vorzugsweise von 25 bis 35 Gew.-% eingesetzt werden. Alternativ kann Ammoniumcarbamat als Vorstufe von Ammoniak als Feststoff oder in wässriger Lösung zudosiert werden. Entsprechende Verfahren sind aus der Abgasnachbehandlung der Automobilindustrie bekannt.

Der Einsatz von Brennkraftmaschinen, die mit Schweröl betrieben werden, erfordert in regelmäßigen Abständen die Entfernung von im Filterelement abgelagerten Rußpartikeln, damit der Strömungswiderstand im Filterelement nicht zu hoch wird. Ebenso ist eine regelmäßige Regeneration des Katalysators erforderlich. Insbesondere kann die Regeneration des Partikelfilters und/oder des Katalysators thermisch erfolgen, wobei eine Temperatur im Bereich von 550 bis 650 °C im Partikelfilter bzw. Katalysator eingestellt wird. Im Automobilbereich ist, um erforderliche Abgastemperaturen zu erreichen, die Nacheinspritzung von zusätzlichem Kraftstoff in den Brennraum bekannt, wobei der nacheingespritzte Kraftstoff durch die auslaufende Hauptverbrennung oder die gegen Ende der Verbrennung im Brennraum vorliegenden hohen Temperaturen bereits im Brennraum gezündet wird. Da dieses Verfahren bei 2-Takt-Motoren nicht möglich ist, ist im Rahmen der vorliegenden Erfindung bevorzugt vorgesehen, Partikelfilter und/oder Katalysator zum Zwecke ihrer Regeneration elektrisch aufzuheißen. Hierzu wird das keramische Filterelement und/oder das keramische Katalysatorelement durch Anlegen eines elektrischen Stroms so stark aufgeheizt, dass sich die abgelagerten Rußpartikel entzünden und abbrennen. Hierzu wird das Filterelement bzw. Katalysatorelement mit Elektroden verbunden, über die der elektrische Strom eingeleitet werden kann. Geeignete Partikelfilter aus einer elektrisch leitfähigen Keramik sind beispielsweise in EP 1 225 311 A2 und EP 0 943 593 A1 beschrieben. Ebenfalls bekannt ist die elektrische Aufheizung von Katalysatoren zum Erreichen der notwendigen Betriebstemperatur oder zur Regenerierung (z.B. EP 0 763 650 A1 und US 5,321,231 A).

Nach einer bevorzugten Ausgestaltung der Erfindung wird die Regeneration in Abhängigkeit eines stromauf des Partikelfilters erfassten Abgasgegendrucks initiiert. Zu diesem Zweck kann stromauf des Partikelfilters eine Strömungswiderstandmesssonde angeordnet sein.

Nach einer besonders bevorzugten Ausführung des Verfahrens erfolgt die Regenerierung des keramischen Partikelfilters und des (keramischen) Katalysators gleichzeitig. Auf diese Weise lassen sich die für die Aufheizung der beiden Komponenten erforderliche elektrische Energie sowie auch die Wärmeverluste deutlich gegenüber separater Aufheizung der beiden Komponenten reduzieren. Dabei wird die Energie des exothermen Prozesses, der im Rahmen der Verbrennung der Rußpartikel im Partikelfilter stattfindet, zur weiteren Erwärmung des Filters und des nachgeschalteten Katalysators genutzt, um so die Zufuhr elektrischer Energie zur weiteren Aufheizung zu reduzieren. In einer bevorzugten Ausführung wird daher nur ein elektrischer Heizkreislauf benötigt und nur eine Messvorrichtung zur Messung des Strömungswiederstandes. Ebenfalls kann in dieser bevorzugten Ausführung mit nur einer Temperatursonde gearbeitet werden. Ferner ist in diesem Zusammenhang bevorzugt vorgesehen, dass das Partikelfilter und der Katalysator in einem gemeinsamen Gehäuse angeordnet sind. Vorzugsweise verfügen beide Komponenten zudem über eine gemeinsame elektrische Heizung.

Durch die Erfindung gelingt es, die Abgase einer Brennkraftmaschine, die mit stark schwefelhaltigen Brennstoffen betrieben wird, so zu reinigen, dass die durch den Verbrennungsprozess entstehenden gasförmigen und partikulären Schadstoffe entweder chemisch umgewandelt oder durch Filtration entfernt werden und somit nicht unkontrolliert in die Umwelt abgegeben werden. Die stromaufwärts vor dem Katalysator stattfindenden Abgasreinigungsprozesse, nämlich die Entschwefelung sowie die Partikelabscheidung, sorgen für eine erheblich reduzierte Belastung des Katalysators mit den sogenannten Katalysatorgiften und erhöhen zusammen mit der regelmäßigen thermischen Reinigung der Katalysatoroberflächen die Lebensdauer des Katalysators erheblich und tragen so zur Verbesserung der Wirtschaftlichkeit bei. Weitere vorteilhafte Ausgestaltungen des Verfahrens sind Gegenstand der abhängigen Ansprüche.

Die Erfindung wird nachfolgend in einem Ausführungsbeispiel anhand der zugehörigen Zeichnung näher erläutert.

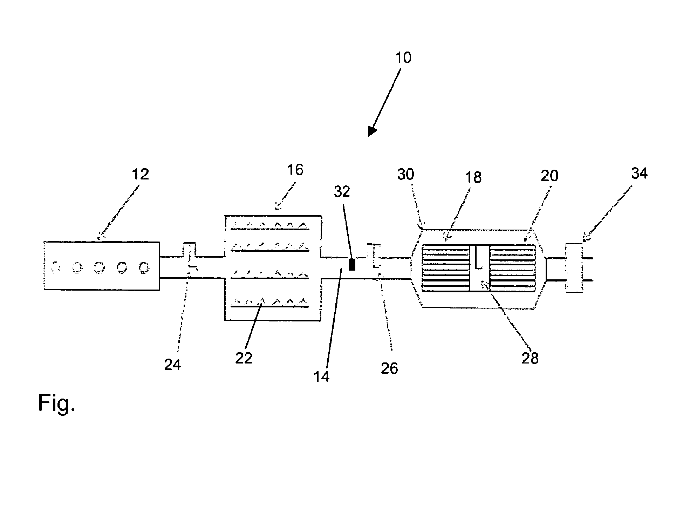

Die einzige Figur zeigt eine insgesamt mit 10 bezeichnete Abgasanlage, die einer mit einem stark schwefelhaltigen Schweröl betriebenen Brennkraftmaschine, insbesondere einer Schiffsbrennkraftmaschine, nachgeschaltet ist und deren Abgas in einem dreistufigen Verfahren nachbehandelt wird. Bei der Brennkraftmaschine 12 handelt es sich insbesondere um einen langsam drehenden 2-Takt-Dieselmotor, wie er in großen Fracht- oder Passagierschiffen üblich ist.

Die erfindungsgemäße Abgasanlage 10 umfasst als wesentliche Elemente einen Abgaskanal 14, in dem eine als Schüttschichtfilter 16 ausgestaltete Entschwefelungsstufe, ein insbesondere keramischer Partikelfilter 18 sowie ein ebenfalls auf einem keramischen Trägerkörper angeordneter Denox-Katalysator 20 (SCR-Katalysator) angeordnet sind.

Der Schüttschichtfilter 16 weist eine Mehrzahl hier nur angedeuteter, vom Abgas durchströmbarer Böden auf, auf denen eine Schüttung eines festen, insbesondere granulierten Adsorbens 22 aufliegt. Das Adsorbens 22 ist so gewählt, dass es zumindest einen Hauptteil der Stickoxide (SO₂ und SO₃) sowie gasförmiger Schwermetalle des Abgases durch Chemiesorption während seiner vertikalen Durchströmung bindet. Als Adsorbentien kommen die vorstehend vorgestellten Materialien in Frage, vorzugsweise mit einem Anteil eines kohlenstoffhaltigen Additivs zur Verbesserung der Schwermetallabscheidung.

Die Befüllung des Schüttschichtfilters 16 mit dem Adsorbens 22 kann beispielsweise durch eine hier nicht dargestellte pneumatische Förderungseinrichtung erfolgen, die auch eine Entleerung des Schüttschichtfilters von verbrauchtem Adsorbens bewirkt. Alternativ kann die Beschickung des Schüttschichtfilters 16 mit dem Adsorbens 22 über eine in der Figur dargestellten, dem Schüttschichtfilter 16 vorgeschaltete Eindüsungseinrichtung 24 erfolgen, die pulverförmiges Adsorbens 22 in den Abgasstrom eindüst, so dass das Adsorbens 22 sich auf den Filterböden absetzt.

Weiterhin kann die Abgasanlage 10 einen stromauf des Schüttschichtfilters 16 vorgesehenen Wärmetauscher (nicht dargestellt) umfassen, der die Temperatur des Abgasstroms auf eine optimale Adsorptionstemperatur einstellt.

In dem nachgeschalteten zweiten Nachbehandlungsschritt erfolgt die Abtrennung partikulärer Bestandteile des Abgases, insbesondere von Rußfeinstaubpartikeln in dem keramischen Partikelfilter 18.

Das so entschwefelte und von Partikeln befreite Abgas gelangt dann in den Denox-Katalysator 20, der ebenfalls auf einem keramischen Trägerelement angeordnet ist. In dem Katalysator 20 erfolgt die katalytische Umsetzung von Stickoxiden NOₓ des Abgases zu Stickstoff N₂ und Wasser H₂O. Zu diesem Zweck werden die Stickoxide mit einem geeigneten Reduktionsmittel auf der betriebswarmen Katalysatoroberfläche in Kontakt gebracht und reduziert. Als Reduktionsmittel wird vorzugsweise Ammoniak NH₃ verwendet, das insbesondere in Form einer wässrigen Ammoniaklösung dem Abgas zudosiert wird. Alternativ kann auch eine chemische Vorstufe von Ammoniak, beispielsweise Harnstoff oder Ammoniumcarbamat verwendet werden, die in der heißen Abgasanlage zersetzt wird und somit Ammoniak freisetzt.

Erfindungsgemäß erfolgt die Zudosierung des Reduktionsmittels über eine Dosiervorrichtung 26, die vor dem Partikelfilter 18 angeordnet ist. Vorteil dieser Anordnung ist, dass das Ammoniak mit Schwefeloxiden, die im Schüttschichtfilter 16 nicht absorbiert wurden, zu Ammoniumsalzen reagieren, welche sich im Partikelfilter 18 abschlagen. Ferner wird die Vermischung des Reduktionsmittels mit dem Abgas verbessert, wozu im Stand der Technikspezielle Mischvorrichtungen im Abgaskanal angeordnet werden müssen.

Wie in der Figur ferner angedeutet ist, kann zusätzlich zu der Dosiervorrichtung 24 eine weitere Dosiervorrichtung 28 zwischen dem Partikelfilter 18 und dem Denox-Katalysator 20 vorgesehen sein. Die Anordnung einer weiteren Dosiervorrichtung 28 erlaubt eine genauere und bedarfsgerechtere Dosierung des Reduktionsmittels.

Sämtliche vorhandenen Dosiervorrichtungen 26, 28 können als 2-Stoff-Düse oder als Rotationsscheibe ausgebildet sein.

Die in regelmäßigen Intervallen durchzuführende thermische Regeneration von Partikelfilter 18 und Katalysator 20 erfolgt vorzugsweise gleichzeitig, um den Energiebedarf für die erforderliche Aufheizung beider Komponenten zu minimieren. Zu diesem Zweck sind Partikelfilter 18 und Katalysator 20 in einem gemeinsamen Gehäuse 30 angeordnet und weisen darüber hinaus eine gemeinsame elektrische Aufheizvorrichtung (nicht dargestellt) auf. Die Regenration des Partikelfilters 18 und des Katalysators 20 wird bei Überschreitung eines Grenzwertes für den Abgasgegendruck ausgelöst. Zu diesem Zweck ist stromauf des Partikelfilters 18 eine Strömungswiderstand-Messsonde 32 angeordnet. Diese misst den zum Abgasgegendruck proportionalen Strömungswiderstand.

Die einzelnen Abgasreinigungsstufen 16, 18, 20, insbesondere die Partikelfilterstufe 18, erzeugen jeweils Druckverluste, wodurch der Abgasgegendruck erhöht wird und die Motorleistung sinkt. Um diese unerwünschte Erhöhung des Abgasgegendrucks zu neutralisieren, ist reingasseitig, also stromabwärts des Katalysators 20 ein Hilfsgebläse 34 angeordnet, das durch Erzeugung eines ansaugenden Unterdrucks den Abgasgegendruck zumindest teilweise kompensiert. Das Hilfsgebläse 34 wird vorzugsweise in Abhängigkeit der Druckdifferenz Δp gesteuert, welcher durch Differenzdruckmessung stromauf und stromab des Partikelfilters 18 gemessen wird. Zu diesem Zweck sind hier nicht dargestellte Drucksensoren stromauf des Partikelfilters 18 und stromab desselben oder stromab des Katalysators 20 im Abgaskanal 14 vorgesehen.

In einer bevorzugten, hier nicht dargestellten Ausführung wird ein Teilabgasstrom stromab des Katalysators 20 abgezweigt und vor der Partikelfilterstufe 18 dem Hauptabgasstrom wieder zugeführt. Auf diese Weise kann ein Schlupf von nicht umgesetztem Reduktionsmittel minimiert werden und der Gesamtverbrauch desselben reduziert werden.

Nach einer weiteren bevorzugten Ausgestaltung, die hier aus Gründen der Einfachheit ebenfalls nicht dargestellt ist, ist vorgesehen, dass die Abgasanlage 10 eine Mehrzahl von Abgassträngen umfasst, wobei jeder Strang die hier dargestellten Abgasreinigungsstufen aufweist. Beispielsweise können drei Abgasstränge (oder Abgasreinigungsstraßen) vorgesehen sein, um die an Bord eines Schiffes beengten Platzverhältnisse besser nutzen zu können. Dabei erfolgt die Aufzweigung vorteilhafterweise stromab der Brennkraftmaschine 12, insbesondere stromab der Turbine eines Abgasturboladers, wobei vorzugsweise die Teilströme vor Austritt aus dem Abgaskanal 14, insbesondere vor Eintritt in einen Schornstein, wieder zusammengeführt werden.

Nach einer weiteren nicht dargestellten Ausgestaltung umfasst die Abgasanlage 10 eine dem Schüttschichtfilter 16 vorgeschaltete Eindüsungseinrichtung für Wasser, um die relative Feuchte des Abgasstroms anzuheben. Es hat sich nämlich erwiesen, dass die Abscheidungsrate von SOₓ im Wege der Chemisortion eine Abhängigkeit von der Luftfeuchte aufweist und bei sehr geringen Luftfeuchtigkeiten relativ langsam verläuft, da die Bildung einer Hydrathülle um SOₓ-Moleküle des ersten Schritt des Chemisorptionsprozesses darstellt und durch hohe Luftfeuchten beschleunigt wird. Hierbei kann vorzugsweise Seewasser verwendet werden oder Kondensationswasser aus einem Abhitzekessel des Schiffsaggregats.

Die einzelnen dargestellten Abgasreinigungsstufen 16, 18, 20 haben jeweils eine schalldämpfende Wirkung, so dass in einer bevorzugten Ausführung auf die Installation eines nachgeschalteten Schalldämpfers verzichtet werden kann.

### BEZUGSZEICHENLISTE

| | |
|---|---|
| 10 | Abgasanlage |
| 12 | Brennkraftmaschine |
| 14 | Abgaskanal |
| 16 | Schüttschichtfilter |
| 18 | Partikelfilter |
| 20 | Katalysator |
| 22 | Adsorbens |
| 24 | Eindüsungsvorrichtung |
| 26 | Dosiervorrichtung |
| 28 | Dosiervorrichtung |
| 30 | Gehäuse |
| 32 | Strömungswiderstand-Messsonde |
| 34 | Gebläse |

## Patentansprüche

1. Verfahren zur Entfernung von Schadstoffen aus einem Abgasstrom einer mit einem schwefelhaltigen Brennstoff betriebenen Brennkraftmaschine (12), wobei der Abgasstrom zumindest 1.000 mg Schwefeloxide (SOₓ) pro Normkubikmeter enthält und das Verfahren die Schritte umfasst:
- Kontaktierung des Abgasstroms mit einem festen Adsorbens (22) oder mit einer Waschlösung, wobei saure Schadstoffe, umfassend Schwefeldioxid und Schwefeltrioxid, chemisorptiv gebunden werden;
- Zudosierung zumindest eines Teils eines Reduktionsmittels oder einer chemischen Vorstufe von diesem in den Abgasstrom;
- anschließende Durchleitung des Abgasstroms durch ein Partikelfilter (18), wobei organische und anorganische Partikel abgetrennt werden; und
- anschließende Zuführung des Abgasstroms zu einem SCR-Katalysator (20), wobei mittels des dem Abgas zudosierten Reduktionsmittels Stickoxide katalytisch umgesetzt werden.

2. Verfahren nach Anspruch 1, **dadurch gekennzeichnet, dass** die Brennkraftmaschine (12) eine mit Schwerölen betriebene Schiffsbrennkraftmaschine ist.

3. Verfahren nach einem der vorhergehenden Ansprüche, **dadurch gekennzeichnet, dass** eine weitere Zudosierung des Reduktionsmittels oder seiner chemischen Vorstufe zwischen Partikelfilter (18) und Katalysator (20) erfolgt.

4. Verfahren nach einem der vorhergehenden Ansprüche, **dadurch gekennzeichnet, dass** das feste Adsorbens (22) in Form einer granulierten Schüttung, insbesondere mit einer Korngröße von 1 bis 20 mm, bevorzugt 2 bis 8 mm, vorliegt.

5. Verfahren nach einem der vorhergehenden Ansprüche, **dadurch gekennzeichnet, dass** das feste Adsorbens (22) ausgewählt wird aus der Gruppe umfassend Erdalkalihydroxide, insbesondere Calciumhydroxid und Magnesiumhydroxid; Natriumbicarbonat, Kalkstein oder eine Mischung von diesen.

6. Verfahren nach einem der vorhergehenden Ansprüche, **dadurch gekennzeichnet, dass** das feste Adsorbens (22) ein kohlenstoffhaltiges Additiv, insbesondere Aktivkohle und/oder Herdofenkoks, enthält, insbesondere mit einem Anteil von 0,1 bis 50 Gew.-%, vorzugsweise von 1 bis 35 Gew.-%.

7. Verfahren nach einem der vorhergehenden Ansprüche, **dadurch gekennzeichnet, dass** der Abgasstrom bei Eintritt in die Abtrennungsstufe der Schwefeloxide eine Temperatur im Bereich von 150 bis 400 °C aufweist.

8. Verfahren nach Anspruch 7, **dadurch gekennzeichnet, dass** die Temperatur des Abgasstroms stromauf der Abtrennungsstufe der Schwefeloxide eingestellt wird, insbesondere durch einen Wärmetauscher.

9. Verfahren nach einem der vorhergehenden Ansprüche, **dadurch gekennzeichnet, dass** stromauf des Abtrennungsstufe der Schwefeloxide die relative Feuchte des Abgasstroms durch Eindüsung von Wasser, insbesondere von Seewasser oder von Kondensationswasser aus einem Abhitzekessel eines Schiffsaggregats, angehoben wird.

10. Verfahren nach einem der vorhergehenden Ansprüche, **dadurch gekennzeichnet, dass** das Reduktionsmittel in Form von Ammoniak, insbesondere einer wässrigen Ammoniaklösung, oder in Form von Harnstoff, insbesondere einer wässrigen Harnstofflösung, oder in Form von Ammoniumcarbamat zudosiert wird.

11. Verfahren nach einem der vorhergehenden Ansprüche, **dadurch gekennzeichnet, dass** ein Teilabgasstrom stromab des Katalysators (20) abgezweigt und vor dem Partikelfilter (18) dem Abgasstrom wieder zugeführt wird.

12. Abgasanlage (10) zur Entfernung von Schadstoffen aus einem Abgasstrom einer mit einem schwefelhaltigen Brennstoff betriebenen Brennkraftmaschine (12), wobei der Abgasstrom zumindest 1.000 mg Schwefeloxide (SOₓ) pro Normkubikmeter enthält, umfassend:
- eine in einem Abgaskanal (14) angeordnete Entschwefelungsstufe, umfassend einen Schüttschichtfilter (16) mit einem festen Adsorbens (22) oder eine Nasswäscheeinrichtung, zur chemisorptiven Bindung saurer Schadstoffe, umfassend Schwefeldioxid und Schwefeltrioxid;
- eine stromab der Entschwefelungsstufe angeordnete Dosiervorrichtung (26) zur Zudosierung eines Reduktionsmittels oder einer chemischen Vorstufe von diesem in den Abgasstrom;
- ein stromab der Dosiervorrichtung (26) angeordnetes Partikelfilter (18) zur Abtrennung organischer und anorganischer Partikel; und
- einen stromab des Partikelfilters (18) angeordneten SCR-Katalysator (20) zur katalytischen Umsetzung von Stickoxiden mittels des dem Abgas zudosierten Reduktionsmittels.

13. Abgasanlage nach Anspruch 12, **dadurch gekennzeichnet, dass** die Brennkraftmaschine (12) eine insbesondere mit Schwerölen betreibbare Schiffsbrennkraftmaschine ist.

14. Abgasanlage nach einem der Ansprüche 12 bis 13, **dadurch gekennzeichnet, dass** stromab des Katalysators (20) ein Hilfsgebläse (34) zur Kompensierung des Abgasgegendrucks angeordnet ist.

15. Abgasanlage nach einem der Ansprüche 12 bis 14, **dadurch gekennzeichnet, dass** eine pneumatische Förderungseinrichtung zur Befüllung des Schüttschichtfilters (16) mit dem festen Adsorbens vorgesehen ist oder dem Schüttschichtfilter (16) eine Eindüsungseinrichtung (24) zur Eindüsung pulverförmigen Adsorbens (22) vorgeschaltet ist.

## Claims

1. A method for removing pollutants from an exhaust gas stream of an internal combustion engine (12) which runs on a sulphur-containing fuel, wherein the exhaust gas stream contains at least 1,000 mg of sulphur oxides (SOx) per standard cubic metre and the method comprises the steps of:
- contacting the exhaust gas stream with a solid adsorbent (22) or with a scrubbing solution, wherein acid pollutants, comprising sulphur dioxide and sulphur trioxide, are chemisorbed;
- dosing at least part of a reductant or a chemical precursor thereof into the exhaust gas stream;
- subsequently, passing the exhaust gas stream through a particle filter (18), wherein organic and inorganic particles are separated; and
- subsequently, introducing the exhaust gas stream into an SCR catalytic converter (20), wherein nitrogen oxides are catalytically converted by the reductant dosed into the exhaust gas.

2. The method according to claim 1, **characterized in that** the internal combustion engine (12) is an onboard internal combustion engine of a ship which runs on heavy oils.

3. The method according to any one of the preceding claims, **characterized in that** another dose of the reductant or its chemical precursor is added between the particle filter (18) and the catalytic converter (20).

4. The method according to any one of the preceding claims, **characterized in that** the solid adsorbent (22) is provided in the form of a granulated bed, in particular with a particle size of 1 to 20 mm, preferably 2 to 8 mm.

5. The method according to any one of the preceding claims, **characterized in that** the solid adsorbent (22) is selected from the group comprising alkaline-earth hydroxides, in particular calcium hydroxide and magnesium hydroxide; sodium bicarbonate, limestone or a mixture thereof.

6. The method according to any one of the preceding claims, **characterized in that** the solid adsorbent (22) contains a carbon-containing additive, in particular activated carbon and/or hearth furnace coke, in particular in an amount of 0.1 to 50 % by weight, preferably 1 to 35 % by weight.

7. The method according to any one of the preceding claims, **characterized in that** the exhaust gas stream has a temperature ranging from 150 to 400 °C when it enters the separation stage of the sulphur oxides.

8. The method according to claim 7, **characterized in that** the temperature of the exhaust gas stream is adjusted upstream of the separation stage of the sulphur oxides, in particular by means of a heat exchanger.

9. The method according to any one of the preceding claims, **characterized in that** the relative humidity of the exhaust gas stream is increased upstream of the separation stage of the sulphur oxides by injecting water, in particular sea water or condensed water from a waste heat boiler of a power generating unit of a ship.

10. The method according to any one of the preceding claims, **characterized in that** the reductant is added in the form of ammonia, in particular an aqueous ammonia solution, or in the form of urea, in particular an aqueous urea solution, or in the form of ammonium carbamate.

11. The method according to any one of the preceding claims, **characterized in that** a partial exhaust gas stream is diverted downstream of the catalytic converter (20) and returned to the exhaust gas stream before the particle filter (18).

12. An exhaust gas unit (10) for removing pollutants from an exhaust gas stream of an internal combustion engine (12) which runs on a sulphur-containing fuel, wherein the exhaust gas stream contains at least 1,000 mg of sulphur oxides (SOₓ) per standard cubic metre, comprising:
- a desulphurization stage arranged in an exhaust gas channel (14), comprising a granular-bed filter (16) with a solid adsorbent (22) or a wet-scrubbing unit, for chemisorbing acid pollutants, comprising sulphur dioxide and sulphur trioxide;
- a dosing device (26) arranged downstream of the desulphurization stage for dosing a reductant or a chemical precursor thereof into the exhaust gas stream;
- a particle filter (18) arranged downstream of the dosing device (26) for separating organic and inorganic particles; and
- an SCR catalytic converter (20) arranged downstream of the particle filter (18), for the catalytic conversion of nitrogen oxides by the reductant dosed into the exhaust gas.

13. The exhaust gas unit according to claim 12, **characterized in that** the internal combustion engine (12) is an onboard internal combustion engine of a ship which can in particular run on heavy oils.

14. The exhaust gas unit according to any one of claims 12 to 13, **characterized in that** an auxiliary fan (34) designed to compensate for the back pressure of the exhaust gas is arranged downstream of the catalytic converter (20).

15. The exhaust gas unit according to any one of claims 12 to 14, **characterized in that** a pneumatic conveyor unit is provided to fill the granular-bed filter (16) with the solid adsorbent or an injection unit (24) for injecting powdery adsorbent (22) is arranged upstream of the granular-bed filter (16).

## Revendications

1. Procédé d'épuration de polluants dans un flux de gaz d'échappement d'un moteur à combustion interne (12) fonctionnant avec un carburant contenant du soufre, le flux de gaz d'échappement contenant au moins 1 000 mg d'oxydes de soufre (SOₓ) par mètre cube normalisé, et le procédé comprenant les étapes suivantes:
- la mise en contact du flux de gaz d'échappement avec un adsorbant (22) solide ou avec une solution de lavage, des polluants acides, comprenant dioxyde de soufre et trioxyde de soufre, étant liés par chimisorption;
- l'ajout d'au moins une partie d'un agent de réduction ou d'un stade antérieur chimique de cet agent dans le flux de gaz d'échappement;
- l'introduction ensuite du flux de gaz d'échappement à travers un filtre à particules (18), des particules organiques et inorganiques étant séparées; et
- le guidage ensuite du flux de gaz d'échappement vers un catalyseur SCR (20), des oxydes d'azote étant transformés par voie catalytique au moyen de l'agent de réduction ajouté aux gaz d'échappement.

2. Procédé selon la revendication 1, **caractérisé en ce que** le moteur à combustion interne (12) est un moteur à combustion interne de bateau fonctionnant avec des huiles lourdes.

3. Procédé selon une des revendications précédentes, **caractérisé en ce qu'**un ajout supplémentaire de l'agent de réduction ou de son stade antérieur chimique est effectué entre le filtre à particules (18) et le catalyseur (20).

4. Procédé selon une des revendications précédentes, **caractérisé en ce que** l'adsorbant (22) solide se présente sous forme d'un chargement de granulés, en particulier avec une taille de grains de 1 à 20 mm, de préférence de 2 à 8 mm.

5. Procédé selon une des revendications précédentes, **caractérisé en ce que** l'adsorbant (22) solide est sélectionné dans le groupe comprenant des hydroxydes alcalinoterreux, en particulier l'hydroxyde de calcium et l'hydroxyde de magnésium; le bicarbonate de sodium, le calcaire ou un mélange de ceux-ci.

6. Procédé selon une des revendications précédentes, **caractérisé en ce que** l'adsorbant (22) solide contient un additif contenant du carbone, en particulier du charbon actif et/ou du coke de four à sole, en particulier avec une fraction de 0,1 à 50 %-poids, de préférence de 1 à 35 %-poids.

7. Procédé selon une des revendications précédentes, **caractérisé en ce que** le flux de gaz d'échappement présente, lors de l'entrée dans l'étage de séparation des oxydes de soufre, une température dans la plage de 150 à 400 °C.

8. Procédé selon la revendication 7, **caractérisé en ce que** la température du flux de gaz d'échappement est réglée en amont de l'étage de séparation des oxydes de soufre, en particulier par un échangeur de chaleur.

9. Procédé selon une des revendications précédentes, **caractérisé en ce que**, en amont de l'étage de séparation des oxydes de soufre, l'humidité relative du flux de gaz d'échappement est augmentée par l'injection d'eau, en particulier d'eau de mer ou d'eau de condensation provenant d'une chaudière à récupération d'un groupe de machines pour bateau.

10. Procédé selon une des revendications précédentes, **caractérisé en ce que** l'agent de réduction est ajouté sous forme d'ammoniac, en particulier d'une solution ammoniacale aqueuse, ou sous forme d'urée, en particulier d'une solution d'urée aqueuse, ou sous forme de carbamate d'ammonium.

11. Procédé selon une des revendications précédentes, **caractérisé en ce qu'**un flux partiel de gaz d'échappement est divisé en aval du catalyseur (20) et renvoyé, avant le filtre à particules (18), au flux de gaz d'échappement.

12. Installation de gaz d'échappement (10) pour l'épuration de polluants dans un flux de gaz d'échappement d'un moteur à combustion interne (12) fonctionnant avec un carburant contenant du soufre, le flux de gaz d'échappement contenant au moins 1 000 mg d'oxydes de soufre (SOₓ) par mètre cube normalisé, comprenant:
- un étage de désulfuration disposé dans une conduite de gaz d'échappement (14), comprenant un filtre à lit tassé (16) avec un adsorbant (22) solide ou un équipement de lavage par voie humide, pour la fixation par chimisorption de polluants acides, comprenant du dioxyde de souffre et du trioxyde de soufre;
- un dispositif de dosage (26) disposé en aval de l'étage de désulfuration pour l'ajout d'un agent de réduction ou d'un stade antérieur chimique de celui-ci dans le flux de gaz d'échappement;
- un filtre à particules (18) disposé en aval du dispositif de dosage (26) pour la séparation de particules organiques et inorganiques; et
- un catalyseur SCR (20) disposé en aval du filtre à particules (18) pour la transformation par voie catalytique d'oxydes d'azote au moyen de l'agent de réduction ajouté aux gaz d'échappement.

13. Installation de gaz d'échappement selon la revendication 12, **caractérisée en ce que** le moteur à combustion interne (12) est un moteur à combustion interne pouvant fonctionner en particulier avec des huiles lourdes.

14. Installation de gaz d'échappement selon une des revendications 12 à 13, **caractérisée en ce qu'**un ventilateur auxiliaire (34) destiné à compenser la contre-pression des gaz d'échappement est disposé en aval du catalyseur (20).

15. Installation de gaz d'échappement selon une des revendications 12 à 14, **caractérisée en ce qu'**il est prévu un équipement de transport pneumatique pour remplir le filtre à lit tassé (16) avec l'adsorbant solide, ou **en ce qu'**un équipement d'injection (24) est monté en amont du filtre à lit tassé (16) pour l'injection d'adsorbant (22) pulvérulent.
